# EUROPEAN PATENT SPECIFICATION

(11) **EP 4 321 963 B1**
(45) Date of publication and mention of the grant of the patent: **13.08.2025**
(21) Application number: 22804831.0
(22) Date of filing: 04.04.2022
(51) Int. Cl.: G06F 1/16, G06V 10/10, G06V 40/13

(54) **FOLDABLE ELECTRONIC DEVICE INCLUDING PLURALITY OF FINGERPRINT SENSORS**
FALTBARE ELEKTRONISCHE VORRICHTUNG MIT MEHREREN FINGERABDRUCKSENSOREN
DISPOSITIF ÉLECTRONIQUE PLIABLE COMPRENANT UNE PLURALITÉ DE CAPTEURS D'EMPREINTES DIGITALES

(30) Priority: 20.05.2021 KR 20210065037
(43) Date of publication of application: 14.02.2024
(73) Proprietor: Samsung Electronics Co., Ltd., Suwon-si, Gyeonggi-do 16677 (KR)
(72) Inventor: HEO, Jihun, Suwon-si, Gyeonggi-do 16677 (KR); KIM, Hyunwoo, Suwon-si, Gyeonggi-do 16677 (KR); PARK, Jihoon, Suwon-si, Gyeonggi-do 16677 (KR); HWANG, Seungho, Suwon-si, Gyeonggi-do 16677 (KR)
(74) Representative: Gulde & Partner
(86) International application number: PCT/KR2022/004803
(87) International publication number: WO 2022/244975

(56) References cited:
- WO-A1-2020/171433
- WO-A2-2017/183910
- KR-A- 20180 123 174
- KR-A- 20190 137 433
- KR-A- 20200 131 103
- KR-A- 20210 041 768
- US-A1- 2018 204 040
- US-A1- 2019 087 629
- US-A1- 2020 133 335
- US-A1- 2021 132 793

## Description

### [Technical Field]

Certain embodiments of the disclosure relate to a foldable electronic device including a plurality of fingerprint sensors.

### [Background Art]

The use of electronic devices such as a foldable smartphone or laptop computer is increasing, and various functions are provided to electronic devices.

Such an electronic device may have various security functions to protect the user's personal or privacy information. The electronic device may use a method of authenticating user's biometric information as one of various security functions.

For example, the electronic device may employ, as a method of authenticating user's biometric information, a method of recognizing and detecting user's fingerprint information by using a fingerprint sensor. Electronic devices with fingerprint sensors are disclosed in WO 2020/171433 A1, WO 2017/183910 A2, US 2020/133335 A1, US 2018/204040 A1, US 2019/087629 A1.

### [Disclosure of Invention]

### [Technical Problem]

A foldable electronic device, such as a foldable-type smartphone or lap top computer, may be operated in a folded state in which a first housing and a second housing are folded with respect to a hinge module or in an unfolded state.

For example, the foldable electronic device may be operated in an in-folding and/or out-folding manner by rotating the first housing and the second housing through the hinge module.

The foldable electronic device may include a flexible display that is disposed at an upper portion of a position corresponding to the first housing and the second housing so as to at least partially cross the first housing and the second housing.

In the foldable electronic device, when the first housing and the second housing are folded or unfolded through the hinge module, the flexible display may also be folded or unfolded.

In the foldable electronic device, a fingerprint sensor may be not disposed in the display. For example, in the foldable electronic device, one capacitive fingerprint sensor may be disposed on a side surface of the first housing or the second housing, and the user's fingerprint may be recognized and detected.

When recognizing and detecting a user's fingerprint to authenticate the user of the electronic device by using one fingerprint sensor disposed on the side surface of the first housing or the second housing, convenience and security in use of the foldable electronic device may be deteriorated.

Various embodiments of the disclosure may provide a foldable electronic device capable of detecting a user's fingerprint in a folded state and/or in an unfolded state by using a plurality of fingerprint sensors that are mounted on a sensor mounting module and are disposed respectively on the front surface and/or rear surface of the first housing and/or second housing of the foldable electronic device.

The technical objectives to be achieved in the disclosure are not limited to those mentioned above, and other technical objectives not mentioned will be clearly understood by those of ordinary skill in the art to which the disclosure belongs from the following description.

### [Solution to Problem]

A foldable electronic device according to the invention is provided in claim 1 of the appended set of claims.

A foldable electronic device according to various embodiments of the disclosure may include: a hinge module coupled at least in part between a first support member and a second support member; a first housing coupled at least in part to a first side of the hinge module by using the first support member; a second housing that is coupled at least in part to a second side of the hinge module by using the second support member and is configured to be unfolded and folded with the first housing by using the hinge module; a flexible display including a first display disposed on a first surface of the first housing, and a second display disposed on a third surface of the second housing; a sensor mounting module disposed in the first housing and the second housing across the inside of the hinge module; a first fingerprint sensor that is mounted on a first surface of the sensor mounting module and is disposed between the third surface of the second housing and the second display; and a second fingerprint sensor that is mounted on a second surface of the sensor mounting module and is disposed on a fourth surface of the second housing.

A foldable electronic device according to various embodiments of the disclosure may include: a hinge module coupled at least in part between a first support member and a second support member; a first housing coupled at least in part to a first side of the hinge module by using the first support member; a second housing that is coupled at least in part to a second side of the hinge module by using the second support member and is configured to be unfolded and folded with the first housing by using the hinge module; a flexible display including a first display disposed on a first surface of the first housing, and a second display disposed on a third surface of the second housing; a sensor mounting module disposed in the first housing and the second housing across an inside of the hinge module; a first fingerprint sensor that is mounted on a first surface of the sensor mounting module and is disposed between the first surface of the first housing and the first display; and a second fingerprint sensor that is mounted on the first surface of the sensor mounting module and is disposed between the third surface of the second housing and the second display.

A foldable electronic device according to various embodiments of the disclosure may include: a hinge module coupled at least in part between a first support member and a second support member; a first housing coupled at least in part to a first side of the hinge module by using the first support member; a second housing that is coupled at least in part to a second side of the hinge module by using the second support member and is configured to be unfolded and folded with the first housing by using the hinge module; a flexible display including a first display disposed on a first surface of the first housing, and a second display disposed on a third surface of the second housing; and a sensor mounting module including a first fingerprint sensor and a second fingerprint sensor, wherein the first fingerprint sensor and the second fingerprint sensor are disposed between the first surface of the first housing and the first display or are disposed between the third surface of the second housing and the second display.

### [Advantageous Effects of invention]

According to various embodiments of the disclosure, a first fingerprint sensor and a second fingerprint sensor mounted on one sensor mounting module are disposed on the front surface and/or the rear surface of the first housing and/or the second housing to thereby allow the foldable electronic device to recognize and detect a user's fingerprint for authentication in a folded state and/or an unfolded state, so that the convenience of using the fingerprint sensor and the security of the electronic device can be enhanced.

In addition, it is possible to provide various effects that are directly or indirectly identified through this document.

### [Brief Description of Drawings]

In connection with the description of the drawings, the same or similar reference symbols may be used for the same or similar components.
FIG. 1A is a block diagram of an electronic device in a network environment according to various embodiments of the disclosure.
FIG. 1B is a block diagram of a display module according to various embodiments of the disclosure.
FIG. 2A is a view illustrating the electronic device (e.g., foldable electronic device) in an unfolded state according to various embodiments of the disclosure.
FIG. 2B is a view illustrating the electronic device in a folded state according to various embodiments of the disclosure.
FIG. 2C is a schematic exploded perspective view of the electronic device according to various embodiments of the disclosure.
Part (a) of FIG. 3 is a view of a foldable electronic device in a substantially unfolded state according to various embodiments of the disclosure.
Part (b) of FIG. 3 is a view of the foldable electronic device in a substantially folded state according to various embodiments of the disclosure.
FIG. 4 is a view illustrating one sensor mounting module disposed in the foldable electronic device of FIG. 3 according to various embodiments of the disclosure.
FIG. 5A is a schematic cross-sectional view of the foldable electronic device along line B-B' in FIG. 3 according to various embodiments of the disclosure.
FIG. 5B is a schematic cross-sectional view of a first fingerprint sensor shown in FIG. 5A according to various embodiments of the disclosure.
Part (a) of FIG. 6 is a view of a foldable electronic device in a substantially unfolded state according to various embodiments of the disclosure.
Part (b) of FIG. 6 is a view of the foldable electronic device in a substantially folded state according to various embodiments of the disclosure.
FIG. 7 is a view illustrating the arrangement of a first fingerprint sensor and a second fingerprint sensor when the foldable electronic device is in an unfolded state according to various embodiments of the disclosure.
FIG. 8 is a view illustrating one sensor mounting module disposed in the foldable electronic device of FIG. 7 according to various embodiments of the disclosure.
Part (a) of FIG. 9 is a schematic perspective view of the foldable electronic device of FIG. 7 when viewed from the front according to various embodiments of the disclosure.
Part (b) of FIG. 9 is a schematic cross-sectional view along line C-C' in part (a) of FIG. 9 according to various embodiments of the disclosure.

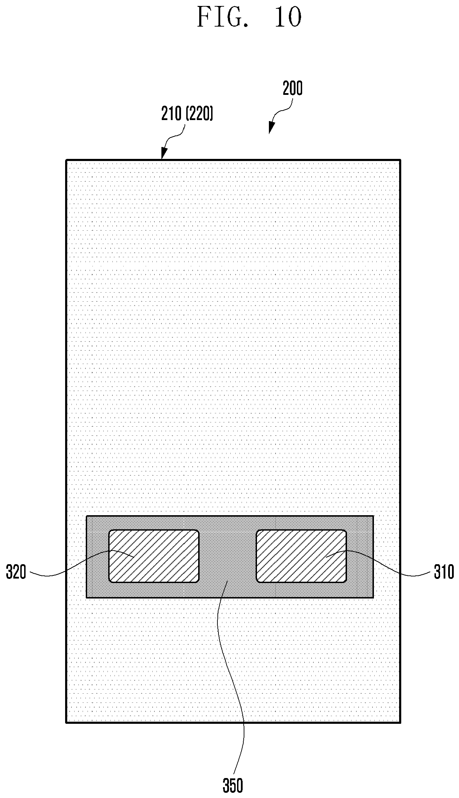

FIG. 10 is a view illustrating an embodiment in which a first fingerprint sensor and a second fingerprint sensor are disposed in a first housing or second housing of the foldable electronic device according to various embodiments of the disclosure.

### [Mode for the Invention]

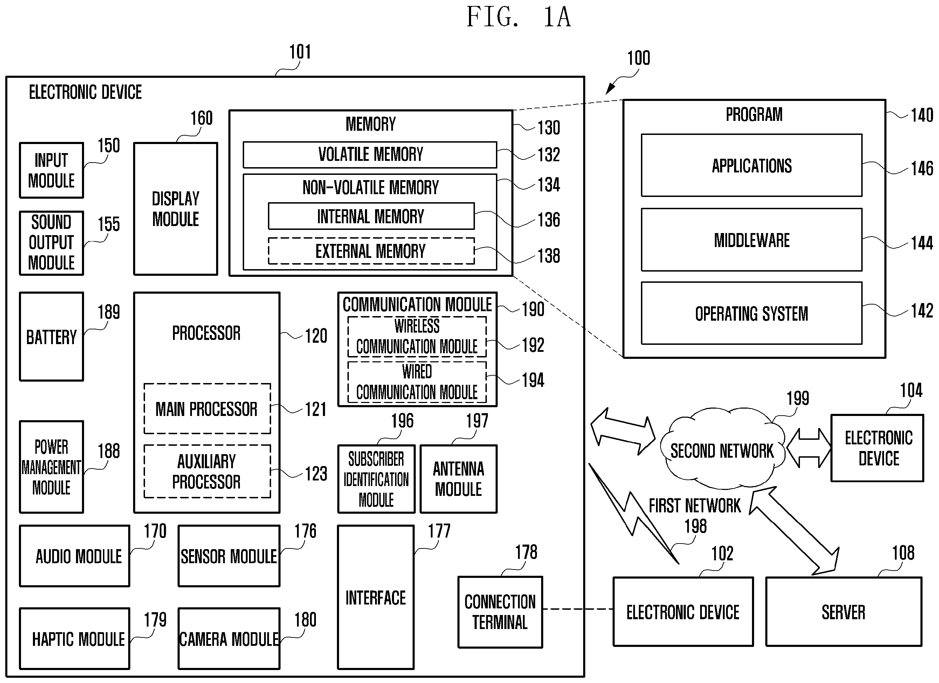

FIG. 1A is a block diagram of an electronic device in a network environment according to various embodiments of the disclosure.

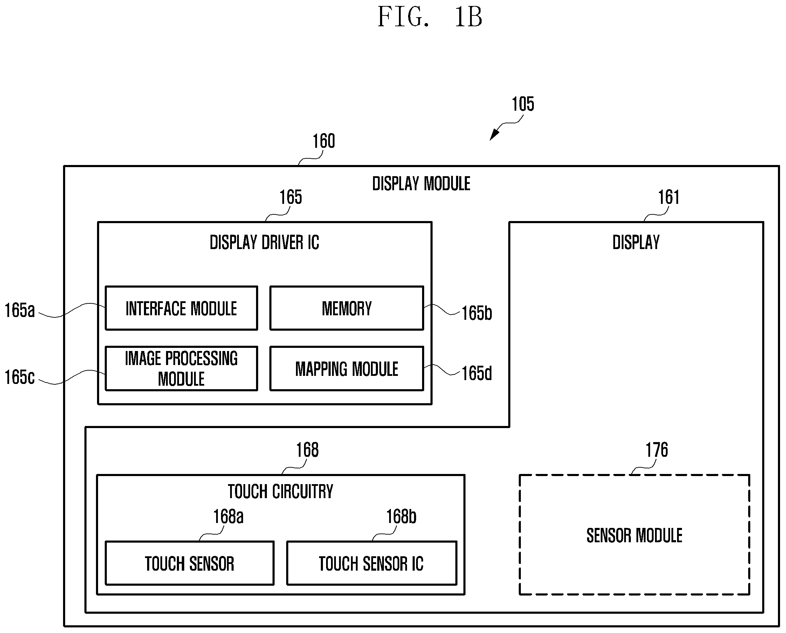

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Fig. 1B is a block diagram 105 illustrating the display module 160 according to various embodiments. Referring to Fig. 1B, the display module 160 may include a display 161 and a display driver integrated circuit (DDI) 165 to control the display 161. The DDI 165 may include an interface module 165a, memory 165b (e.g., buffer memory), an image processing module 165c, or a mapping module 165d. The DDI 165 may receive image information that contains image data or an image control signal corresponding to a command to control the image data from another component of the electronic device 101 via the interface module 165a. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 165 may communicate, for example, with touch circuitry 168 or the sensor module 176 via the interface module 165a. The DDI 165 may also store at least part of the received image information in the memory 165b, for example, on a frame by frame basis.

The image processing module 165c may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 161.

The mapping module 165d may generate a voltage value or a current value corresponding to the image data pre-processed or post-processed by the image processing module 165c. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 161 may be driven, for example, based at least in part on the voltage value or the current value such that visual information (e.g., a text, an image, or an icon) corresponding to the image data may be displayed via the display 161.

According to an embodiment, the display module 160 may further include the touch circuitry 168. The touch circuitry 168 may include a touch sensor 168a and a touch sensor IC 168b to control the touch sensor 168a. The touch sensor IC 168b may control the touch sensor 168a to sense a touch input or a hovering input with respect to a certain position on the display 161. To achieve this, for example, the touch sensor 168a may detect (e.g., measure) a change in a signal (e.g., a voltage, a quantity of light, a resistance, or a quantity of one or more electric charges) corresponding to the certain position on the display 161. The touch circuitry 168 may provide input information (e.g., a position, an area, a pressure, or a time) indicative of the touch input or the hovering input detected via the touch sensor 168a to the processor 120. According to an embodiment, at least part (e.g., the touch sensor IC 168b) of the touch circuitry 168 may be formed as part of the display 161 or the DDI 165, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 161, the DDI 165, or the touch circuitry 168)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 161. As another example, when the sensor module 176 embedded in the display module 160 includes a pressure sensor, the pressure sensor may obtain pressure information corresponding to a touch input received via a partial or whole area of the display 161. According to an embodiment, the touch sensor 168a or the sensor module 176 may be disposed between pixels in a pixel layer of the display 161, or over or under the pixel layer.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

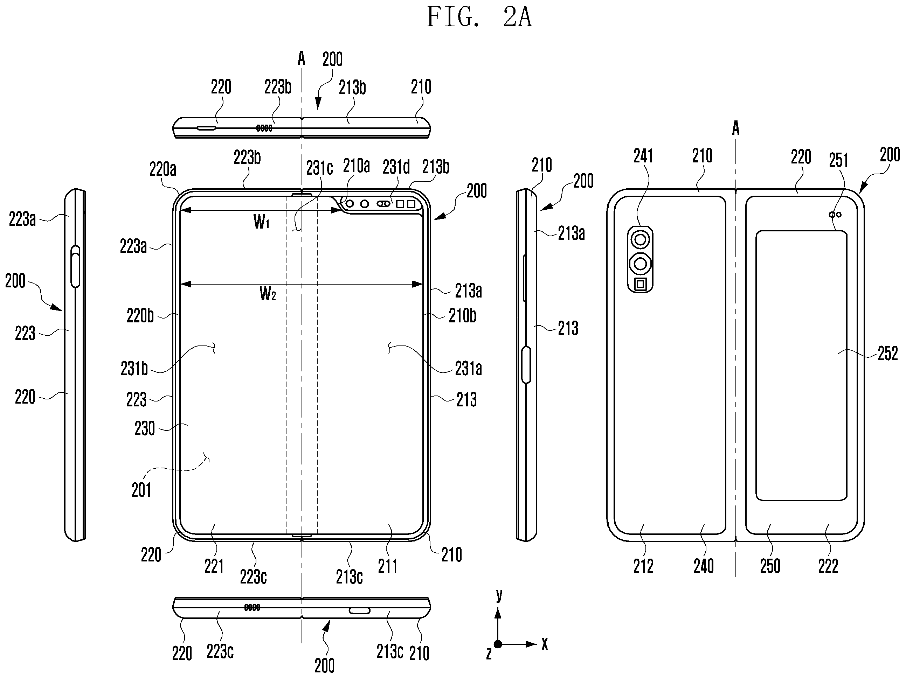

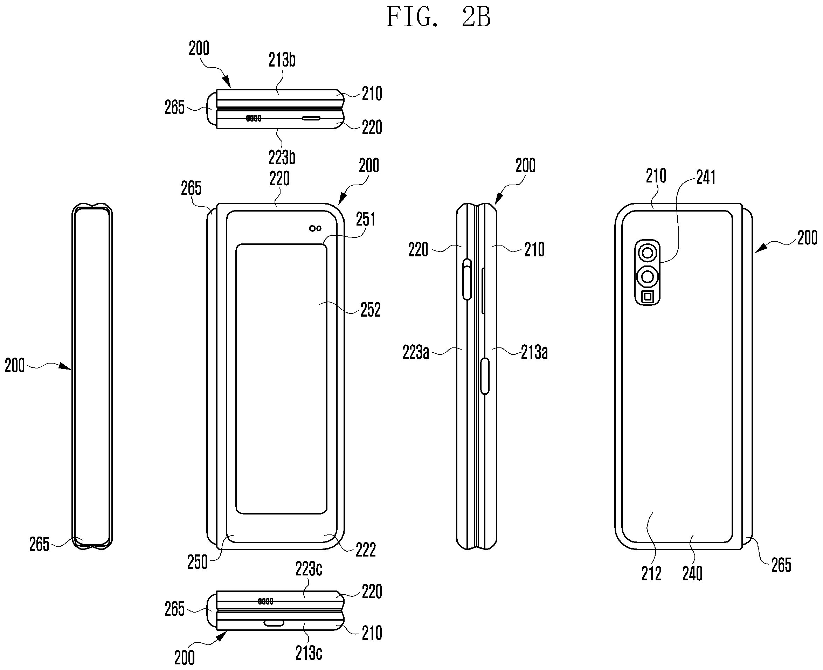

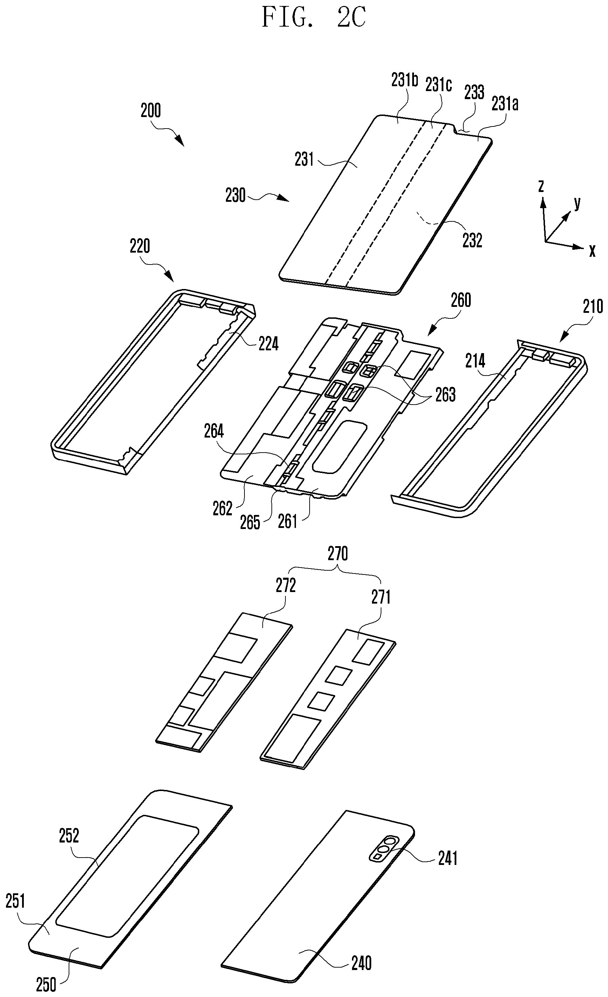

FIG. 2A is a view illustrating an electronic device (e.g., foldable electronic device) in an unfolded state according to various embodiments of the disclosure. FIG. 2B is a view illustrating the electronic device in a folded state according to various embodiments of the disclosure. FIG. 2C is a schematic exploded perspective view of the electronic device according to various embodiments of the disclosure.

The electronic device 101 disclosed in FIGS. 1A and 1B may be incorporated in the embodiments disclosed in FIGS. 2A to 2C. For example, the electronic device 200 shown in FIGS. 2A to 2C may include the processor 120, memory 130, input module 150, sound output module 155, display module 160, audio module 170, sensor module 176, interface 177, connection terminal 178, haptic module 179, camera module 180, antenna module 197, and/or subscriber identification module 196 shown in FIG. 1A. The electronic device shown in FIGS. 2A to 2C may include a foldable electronic device 200.

With reference to FIGS. 2A to 2C, the foldable electronic device 200 according to various embodiments of the disclosure may include a pair of housings (e.g., first housing 210 and second housing 220) (e.g., foldable housing) that are foldable to face each other with respect to a hinge module (e.g., hinge module 264 in FIG. 2C). According to an embodiment, the foldable electronic device 200 may include a flexible display 230 (e.g., foldable display) disposed in the space formed by a hinge cover (e.g., hinge cover 265 in FIG. 2B) that covers foldable portions of the pair of housings (e.g., first housing 210, second housing 220) and the pair of housings (e.g., first housing 210, second housing 220).

According to various embodiments, the flexible display 230 disposed in the space formed by the pair of housings (e.g., first housing 210, second housing 220) may include one display or at least two displays.

According to various embodiments, the surface on which the flexible display 230 is disposed may be defined as the front surface (or, first surface) of the foldable electronic device 200, and the opposite surface of the front surface may be defined as the rear surface (or, second surface) of the foldable electronic device 200. The surface surrounding the space between the front surface and the rear surface may be defined as a side surface of the foldable electronic device 200.

According to various embodiments, the pair of housings (e.g., first housing 210, second housing 220) may include the first housing 210 including a sensor region 231d, the second housing 220, a first rear cover 240, and a second rear cover 250. The pair of housings 210 and 220 of the foldable electronic device 200 is not limited to the shape and combination shown in FIGS. 2A and 2C, and may be implemented with a combination and/or coupling of other shapes or parts. For example, in another embodiment, the first housing 210 and the first rear cover 240 may be integrally formed, and the second housing 220 and the second rear cover 250 may be integrally formed.

According to various embodiments, the first housing 210 and the second housing 220 may be disposed at both sides with respect to the folding axis (A axis) and may be substantially symmetrical with respect to the folding axis (A axis). According to an embodiment, the angle or distance between the first housing 210 and the second housing 220 may vary depending upon whether the foldable electronic device 200 is in the unfolded or flat state, the folded state, or the intermediate state. According to an embodiment, the first housing 210 includes a sensor region 23 1d where various sensors are arranged unlike the second housing 220, but may have a symmetrical shape with the second housing 220 in other regions. According to an embodiment, the sensor region 231d may be additionally disposed in some region of the second housing 220 or may be replaced. According to an embodiment, the first housing 210 and the second housing 220 may have an asymmetric shape with respect to the folding axis A. For example, when the electronic device 200 is in the folded state, the first housing 210 and the second housing 220 may be folded in an asymmetrical shape with respect to the folding axis A so that a portion of the flexible display 230 is exposed to the outside of the electronic device 200.

According to various embodiments, during the unfolded state of the electronic device 200, the first housing 210 may be connected to the hinge module (e.g., hinge module 264 in FIG. 2C), and may include a first surface 211 facing the front surface of the foldable electronic device 200, a second surface 212 facing in a direction opposite to the first surface 211, and a first side member 213 surrounding at least a portion of the space between the first surface 211 and the second surface 212. According to an embodiment, the first side member 213 may include a first side surface 213a disposed in parallel with the folding axis (A axis), a second side surface 213b extending from one end of the first side surface 213a in a direction perpendicular to the folding axis (A axis), and a third side surface 213c extending from the other end of the first side surface 213a in a direction perpendicular to the folding axis (A axis).

According to various embodiments, during the unfolded state of the electronic device 200, the second housing 220 may be connected to the hinge module (e.g., hinge module 264 in FIG. 2C), and may include a third surface 221 facing the front surface of the foldable electronic device 200, a fourth surface 222 facing in a direction opposite to the third surface 221, and a second side member 223 surrounding at least a portion of the space between the third surface 221 and the fourth surface 222. According to an embodiment, the second side member 223 may include a fourth side surface 223a disposed in parallel with the folding axis (A axis), a fifth side surface 223b extending from one end of the fourth side surface 223a in a direction perpendicular to the folding axis (A axis), and a sixth side surface 223c extending from the other end of the fourth side surface 223a in a direction perpendicular to the folding axis (A axis). According to an embodiment, the third surface 221 may face the first surface 211 in the folded state.

According to various embodiments, the foldable electronic device 200 may include a recess 201 formed to accommodate the flexible display 230 through a structural combination of the first housing 210 and the second housing 220. The recess 201 may have substantially the same size as the flexible display 230. According to an embodiment, the recess 201 may have two or more different widths in a direction perpendicular to the folding axis (A axis) due to the sensor region 231d. For example, the recess 201 may have a first width (W1) between a first portion 220a of the second housing 220 and a first portion 210a of the first housing 210 formed at the edge of the sensor region 231d, and have a second width (W2) between a second portion 220b of the second housing 220 and a second portion 210b of the first housing 210 that does not correspond to the sensor region 213d and is parallel to the folding axis (A axis). Here, the second width (W2) may be wider than the first width (W1). For example, the recess 201 may be formed to have the first width (W1) ranging from the first portion 210a of the first housing 210 to the first portion 220a of the second housing 220 in an asymmetric shape, and the second width (W2) ranging from the second portion 210b of the first housing 210 to the second portion 220b of the second housing 220 in a symmetric shape. According to an embodiment, the first portion 210a and the second portion 210b of the first housing 210 may be formed to have different distances from the folding axis (A axis). The width of the recess 201 may be not limited to the illustrated example. According to various embodiments, the recess 201 may have two or more different widths owing to the shape of the sensor region 213d or asymmetrical portions of the first housing 210 or the second housing 220.

According to various embodiments, at least some of the first housing 210 and the second housing 220 may be made of a rigid metal or non-metal material to support the flexible display 230.

According to various embodiments, the sensor region 231d may be formed to have a preset area near to one corner of the first housing 210. According to various embodiments of the disclosure, the sensor region 231d may be disposed under the flexible display 230 or disposed inside the flexible display 230 so as not to be exposed to the outside of the electronic device 200. The arrangement, shape, or size of the sensor region 231d may be not limited to the illustrated example. For example, the sensor region 231d may be disposed at another corner of the first housing 210 or in any region between the upper corner and the lower corner. According to an embodiment, the sensor region 231d may be disposed at least some region of the second housing 220. The sensor region 231d may be disposed to extend to the first housing 210 and the second housing 220. According to an embodiment, the foldable electronic device 200 may include various components exposed to the front surface of the foldable electronic device 200 through the sensor region 213d or through one or more openings provided in the sensor region 231d. According to various embodiments, the various components may include at least one of, for example, a front camera device, a receiver, a proximity sensor, an illuminance sensor, an iris recognition sensor, an ultrasonic sensor, or an indicator.

According to various embodiments, the first rear cover 240 may be disposed on the second surface 212 of the first housing 210 and may have a substantially rectangular periphery. According to an embodiment, at least a portion of the periphery may be wrapped by the first housing 210. The second rear cover 250 may be disposed on the fourth surface 222 of the second housing 220, and at least a portion of the periphery thereof may be wrapped by the second housing 220.

According to various embodiments, the first rear cover 240 and the second rear cover 250 may have a substantially symmetrical shape with respect to the folding axis (A axis). The first rear cover 240 and the second rear cover 250 may also have various different shapes. According to an embodiment, the first rear cover 240 may be formed as a single body with the first housing 210, and the second rear cover 250 may be formed as a single body with the second housing 220.

According to various embodiments, the first rear cover 240, the second rear cover 250, the first housing 210, and the second housing 220 may be combined with each other so as to provide a space where various components (e.g., printed circuit board, antenna module (e.g., antenna module 197 in FIG. 1A), sensor module (e.g., sensor module 176 in FIG. 1A), and battery (e.g., battery 189 in FIG. 1A)) of the foldable electronic device 200 can be arranged. According to an embodiment, one or more components may be disposed on or visually exposed via the rear surface of the foldable electronic device 200. For example, one or more components or sensors may be visually exposed through a first rear region 241 of the first rear cover 240. According to an embodiment, the sensors may include a proximity sensor, a rear camera device, and/or a flash. According to an embodiment, at least a portion of the sub-display 252 may be visually exposed through a second rear region 251 of the second rear cover 250. The sub-display 252 may be disposed over the whole of the fourth surface 222 of the second rear cover 250.

According to various embodiments, the flexible display 230 (e.g., display module 160 in FIG. 1A) may be disposed on the space formed by a pair of housings (e.g., first housing 210 and second housing 220). For example, the flexible display 230 may be seated in the recess 201 formed by the pair of housings 210 and 220, and may be disposed to substantially occupy most of the front surface of the foldable electronic device 200. According to an embodiment, the front surface of the foldable electronic device 200 may include the flexible display 230, a portion (e.g., peripheral region) of the first housing 210 close to the flexible display 230, and a portion (e.g., peripheral region) of the second housing 220. According to an embodiment, the rear surface of the foldable electronic device 200 may include the first rear cover 240, a portion (e.g., peripheral region) of the first housing 210 close to the first rear cover 240, the second rear cover 250, and a portion (e.g., peripheral region) of the second housing 220 close to the second rear cover 250.

According to various embodiments, the flexible display 230 may refer to a display whose at least a portion may be deformed into a flat or curved surface. According to an embodiment, the flexible display 230 may include a bending region 231c (e.g., folding region), a first flat region 231a disposed on one side (e.g., right side of the bending region 231c) with respect to the bending region 231c, and a second flat region 231b disposed on the other side (e.g., left side of the bending region 231c). For example, the first flat region 231a may be disposed on the first surface 211 of the first housing 210, and the second flat region 231b may be disposed on the third surface 221 of the second housing 220. According to an embodiment, this demarcation of the flexible display 230 is only an example, and the flexible display 230 may be subdivided into plural regions (e.g., four or more or two regions) according to the structure or functionality. According to an embodiment, in the embodiment of FIG. 2A, the area of the display 230 may be subdivided with respect to the bending region 231c or the folding axis (A axis) extending parallel to the y-axis; however, the area of the display 230 may be subdivided with respect to a different bending region (e.g., folding region parallel to the x-axis) or a different folding axis (e.g., folding axis parallel to the x-axis). According to an embodiment, the aforementioned subdivision of the flexible display 230 is only a physical demarcation based on the pair of housings 210 and 220 and the hinge module (e.g., hinge module 264 in FIG. 2C), and the flexible display 230 may substantially present one full screen through the pair of housings 210 and 220 and the hinge module (e.g., hinge module 264 in FIG. 2C). According to an embodiment, the first flat region 231a and the second flat region 231b may have an overall symmetrical shape with respect to the bending region 231c. According to an embodiment, although, unlike the second flat region 231b, the first flat region 231a may include a notch region (e.g., notch region 233 in FIG. 2C) cut according to the presence of the sensor region 231d, it may have a symmetrical shape with the second flat region 231b in other portions. For example, the first flat region 231a and the third flat region 231b may include portions with symmetrical shapes and portions with asymmetrical shapes. According to an embodiment, when the sensor region 231d is disposed under (e.g., -Z direction) of the flexible display 230 or disposed inside the flexible display 230, as the notch region 233 is omitted, the first flat region 231a and the second flat region 231b may have a substantially symmetrical shape with respect to the bending region 231c.

With reference to FIG. 2B, the foldable electronic device 200 may include a hinge cover 265. The hinge cover 265 may be disposed between the first housing 210 and the second housing 220 so as to cover the internal components (e.g., hinge module 264 in FIG. 2C). According to an embodiment, the hinge cover 265 may be covered by portions of the first housing 210 and the second housing 220 or be exposed to the outside according to the operating state (e.g., unfolded state or folded state) of the foldable electronic device 200. For example, the hinge cover 265 may support the hinge module (e.g., hinge module 264 in FIG. 2C), and may be disposed so that it is exposed to the outside when the foldable electronic device 200 is in the folded state and it is invisible from the outside by being drawn into a first space (e.g., internal space of the first housing 210) and a second space (e.g., internal space of the second housing 220) when in the unfolded state.

According to various embodiments, when the foldable electronic device 200 is in the unfolded state as shown in FIG. 2A, the hinge cover 265 may be covered by the first housing 210 and the second housing 220 so as not to be exposed. When the foldable electronic device 200 is in the folded state as shown in FIG. 2B, the hinge cover 265 may be exposed to the outside between the first housing 210 and the second housing 220. According to an embodiment, when in the intermediate state where the first housing 210 and the second housing 220 make a certain angle, the hinge cover 265 may be partially exposed to the outside of the foldable electronic device 200 between the first housing 210 and the second housing 220. In this case, the exposed portion may be less than that for the fully folded state of the foldable electronic device 200. According to an embodiment, the hinge cover 265 may include a curved surface.

According to various embodiments, when the foldable electronic device 200 is in the unfolded state (e.g., state of FIG. 2A), the first housing 210 and the second housing 220 may substantially make an angle of 180 degrees, and the first flat region231a and the second flat region 231b of the flexible display 230 may be disposed to face in the same direction (e.g., horizontal direction). In this case, the bending region 231c may be coplanar with the first flat region 231a and the second flat region 231b.

According to various embodiments, when the foldable electronic device 200 is in the folded state (e.g., state of FIG. 2B), the first housing 210 and the second housing 220 may be disposed to face each other. The first flat region 231a and the second flat region 231b of the flexible display 230 may face each other, making a specific angle (e.g., between 0 degrees and 10 degrees). In this case, at least a portion of the bending region 231c may be bent to have a specific curvature.

According to various embodiments, when the foldable electronic device 200 is in the intermediate state, the first housing 210 and the second housing 220 may be disposed to make a certain angle (e.g., between 85 degrees and 95 degrees). The first flat region 231a and the second flat region 231b of the flexible display 230 may form an angle greater than that for the folded state and less than that for the unfolded state. At least a portion of the bending region 231c may be bent to have a specific curvature. In this case, the curvature of the bending region 231c may be less than that for the folded state.

With reference to FIG. 2C, the foldable electronic device 200 according to various embodiments of the disclosure may include a flexible display 230, a support member assembly 260, at least one printed circuit board 270, a first housing 210, a second housing 220, a first rear cover 240, and a second rear cover 250.

According to various embodiments, the flexible display 230 may include a display panel 231, and at least one plate 232 or layer on which the display panel 231 is seated. According to an embodiment, the at least one plate 232 may be disposed between the display panel 231 and the support member assembly 260. The display panel 231 may be disposed on at least some of one surface of the plate 232. The plate 232 may be formed in a shape corresponding to the display panel 231. For example, a portion of the plate 232 may be formed in a shape corresponding to the notch region 233 of the display panel 231.

According to various embodiments, the support member assembly 260 may include a first support member 261, a second support member 262, a hinge module 264 disposed between the first support member 261 and the second support member 262, a hinge cover 265 to cover the hinge module 264, and a wiring member 263 (e.g., flexible printed circuit board (FPCB)) that crosses the first support member 261 and the second support member 262.

According to various embodiments, the support member assembly 260 may be disposed between the at least one plate 232 and at least one printed circuit board 270. According to an embodiment, the first support member 261 may be disposed between the first flat region 231a of the flexible display 230 and the first printed circuit board 271. The second support member 262 may be disposed between the second flat region 231b of the flexible display 230 and the second printed circuit board 272. According to an embodiment, at least some of the wiring member 263 and the hinge module 264 may be disposed within the support member assembly 260. The wiring member 263 may be disposed in a direction crossing the first support member 261 and the second support member 262 (e.g., x-axis direction). The wiring member 263 may be disposed in a direction (e.g., x-axis direction) perpendicular to the folding axis (e.g., y-axis or A axis in FIG. 2A) of the bending region 231c.

According to various embodiments, the at least one printed circuit board 270 may include the first printed circuit board 271 disposed on the side of the first support member 261, and the second printed circuit board 272 disposed on the side of the second support member 262. The first printed circuit board 271 and the second printed circuit board 272 may be disposed inside the space formed by the support member assembly 260, the first housing 210, the second housing 220, the first rear cover 240, and the second rear cover 250. Components (e.g., processor, memory) for implementing various functions of the foldable electronic device 200 may be mounted on the first printed circuit board 271 and the second printed circuit board 272.

According to various embodiments, in a state where the flexible display 230 is coupled to the support member assembly 260, the first housing 210 and the second housing 220 may be assembled to each other so as to be coupled to both sides of the support member assembly 260. The first housing 210 and the second housing 220 may be coupled to the support member assembly 260 by being slid on both sides of the support member assembly 260.

According to various embodiments, as the first support member 261 and the second support member 262 are rotated through the hinge module 264, the first housing 210 and the second housing 220 may be rotated correspondingly. According to an embodiment, the first housing 210 may include a first rotary support surface 214, and the second housing 520 may include a second rotary support surface 224 in correspondence to the first rotary support surface 214. The first rotary support surface 214 and the second rotary support surface 224 may include a curved surface corresponding to the curved surface included in the hinge cover 265. According to an embodiment, when the foldable electronic device 200 is in the unfolded state (e.g., state of FIG. 2A), the first rotary support surface 214 and the second rotary support surface 224 may cover the hinge cover 265 so that the hinge cover 265 may be not or minimally exposed to the rear surface of the foldable electronic device 200. According to an embodiment, when the foldable electronic device 200 is in the folded state (e.g., state of FIG. 2B), the first rotary support surface 214 and the second rotary support surface 224 may rotate along the curved surface included in the hinge cover 265 so that the hinge cover 265 may be exposed to the rear surface of the foldable electronic device 200.

The foldable electronic device 200 according to the illustrated embodiment may be an in-folding type electronic device in which the flexible display 230 is folded inwardly facing each other so that the flexible display 230 is not exposed to the outside of the foldable electronic device 200 in the folded state. **In** another embodiment (not shown), the foldable electronic device 200 may be an out-folding type electronic device in which the flexible display 230 is folded outwardly so that the flexible display 230 is visually exposed to the outside of the foldable electronic device 200 in the folded state. **In** another embodiment (not shown), the foldable electronic device 200 may be a multi-folding type electronic device in which in-folding and out-folding are combined.

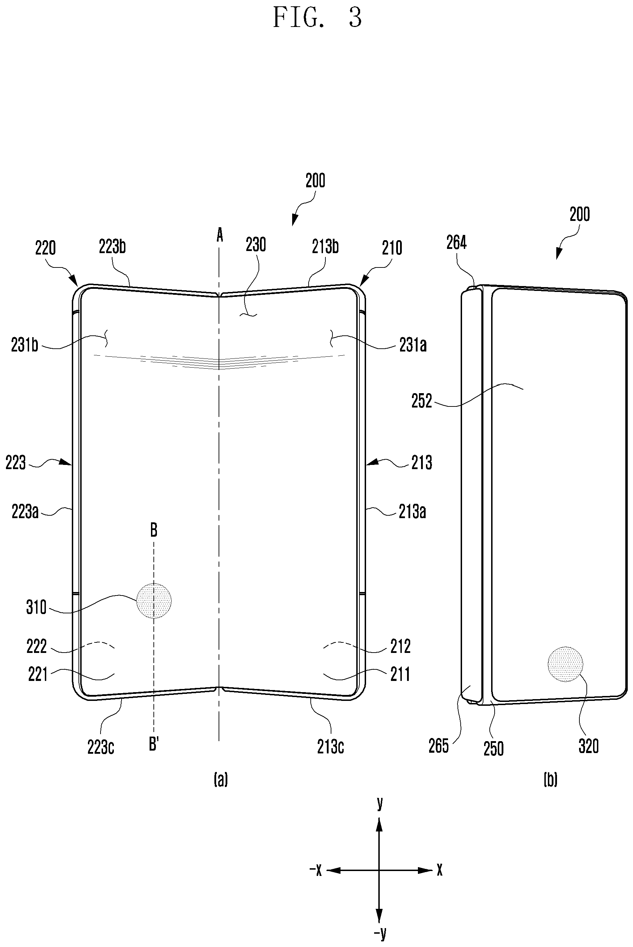

FIG. 3 is schematic views of a foldable electronic device in the unfolded state and in the folded state according to various embodiments of the disclosure. For example, part (a) of FIG. 3 is a view of the foldable electronic device in a substantially unfolded state according to various embodiments of the disclosure. Part (b) of FIG. 3 is a view of the foldable electronic device in a substantially folded state according to various embodiments of the disclosure.

According to various embodiments, the embodiments of the foldable electronic device 200 illustrated in parts (a) and (b) of FIG. 3 and subsequent drawings may include the embodiments illustrated in FIGS. 1A to 2C.

In the description of the following embodiments, the same reference symbols may be assigned to the components substantially the same as those of the embodiments disclosed in FIGS. 1A to 2C described above, and repeated descriptions about the functions thereof may be omitted.

With reference to parts (a) and (b) of FIG. 3, the foldable electronic device 200 according to various embodiments of the disclosure may include a first housing 210 and a second housing 220 that are folded to face each other with respect to a hinge module 264 (e.g., hinge module in FIG. 2C). The foldable electronic device 200 may include a hinge cover 265 that is disposed between the first housing 210 and the second housing 220 to cover the hinge module 264 capable of being folded and unfolded. The foldable electronic device 200 may include a flexible display 230 disposed in a space formed by the first housing 210 and the second housing 220.

According to an embodiment, at least some of the first housing 210 may be coupled to a first side of the hinge module 264 by using a first support member (e.g., first support member 261 in FIG. 2C). At least some of the second housing 220 may be coupled to a second side of the hinge module 264 by using a second support member (e.g., second support member 262 in FIG. 2C). The first housing 210 and the second housing 220 may be configured to be unfolded and/or folded with respect to the hinge module 264 (e.g., A-axis). The flexible display 230 may be supported on top of the first housing 210 and the second housing 220, and may be configured to be unfolded and folded according to the unfolded state and folded state of the first housing 210 and the second housing 220.

According to various embodiments, the first housing 210 may include a first surface 211 disposed to face the front surface of the foldable electronic device 200, a second surface 212 facing in a direction opposite to the first surface 211, and a first side member 213 surrounding at least some of the space between the first surface 211 and the second surface 212. The first side member 213 may include a first side surface 213a disposed parallel to the folding axis (A axis) of the first housing 210 and the second housing 220, a second side surface 213b extended from one end of the first side surface 213a in a direction perpendicular to the folding axis (A axis), and a third side surface 213c extended from the other end of the first side surface 213a in a direction perpendicular to the folding axis (A axis).

According to various embodiments, the second housing 220 may include a third surface 221 disposed to face the front surface of the foldable electronic device 200, a fourth surface 222 facing in a direction opposite to the third surface 221, and a second side member 223 surrounding at least some of the space between the third surface 221 and the fourth surface 222. The second side member 223 may include a fourth side surface 223a disposed parallel to the folding axis (A axis) of the first housing 210 and the second housing 220, a fifth side surface 223b extended from one end of the fourth side surface 223a in a direction perpendicular to the folding axis (A axis), and a sixth side surface 223c extended from the other end of the fourth side surface 223a in a direction perpendicular to the folding axis (A axis). According to an embodiment, the third surface 221 may face the first surface 211 in the folded state.

According to various embodiments, the first housing 210 may include a first display 231a (e.g., first flat region in FIG. 2C) being a first part of the flexible display 230. The second housing 220 may include a second display 231b (e.g., second flat region in FIG. 2C) being a second part of the flexible display 230. The first display 231a may be disposed on the first surface 211 of the first housing 210, and the second display 231b may be disposed on the third surface 221 of the second housing 220.

According to various embodiments, the second rear cover 250 may be disposed on the fourth surface 222 of the second housing 220. A sub-display 252 may be disposed on the second rear cover 250 disposed in the second housing 220.

According to an embodiment, in the foldable electronic device 200 according to various embodiments of the disclosure, a first fingerprint sensor 310 may be disposed on the third surface 221 of the second housing 220. The first fingerprint sensor 310 may be disposed between the second display 231b of the second housing 220 and the second support member (e.g., second support member 262 in FIG. 2C). The first fingerprint sensor 310 may be disposed closer to the sixth side surface 223c among the fifth side surface 223b and the sixth side surface 223c of the second housing 220. **In** another embodiment, the first fingerprint sensor 310 may be disposed closer to the fifth side surface 223b among the fifth side surface 223b and the sixth side surface 223c of the second housing 220. The first fingerprint sensor 310 may include a slim-type optical fingerprint sensor.

According to an embodiment, in the foldable electronic device 200 according to various embodiments of the disclosure, a second fingerprint sensor 320 may be disposed on the fourth surface 222 of the second housing 220. The second fingerprint sensor 320 may be disposed between the second support member (e.g., second support member 262 in FIG. 2C) of the second housing 220 and the sub-display 252. The second fingerprint sensor 320 may be disposed closer to the sixth side surface 223c among the fifth side surface 223b and the sixth side surface 223c of the second housing 220. In another embodiment, the second fingerprint sensor 320 may be disposed closer to the fifth side surface 223b among the fifth side surface 223b and the sixth side surface 223c of the second housing 220. In one embodiment, the second fingerprint sensor 320 may be disposed closer to the sixth side surface 223c than the first fingerprint sensor 310. The second fingerprint sensor 320 may include a lens-type optical fingerprint sensor.

According to various embodiments, in a situation where the first fingerprint sensor 310 (e.g., slim-type optical fingerprint sensor) is disposed on the front surface (e.g., third surface 221) of the second housing 220 and the second fingerprint sensor 320 (e.g., lens-type optical fingerprint sensor) is disposed on the rear surface (e.g., fourth surface 222) of the second housing 220, when the foldable electronic device 200 is in the unfolded state, the foldable electronic device 200 may recognize and detect a user's fingerprint and perform authentication by using the first fingerprint sensor 310 disposed on the third surface 221 of the second housing 220.

According to various embodiments, in a situation where the first fingerprint sensor 310 (e.g., slim-type optical fingerprint sensor) is disposed on the front surface (e.g., third surface 221) of the second housing 220 and the second fingerprint sensor 320 (e.g., lens-type optical fingerprint sensor) is disposed on the rear surface (e.g., fourth surface 222) of the second housing 220, when the foldable electronic device 200 is in the folded state, the foldable electronic device 200 may recognize and detect a user's fingerprint and perform authentication by using the second fingerprint sensor 320 disposed on the fourth surface 222 of the second housing 220.

According to various embodiments, the foldable electronic device 200 according to various embodiments of the disclosure may detect and authenticate a user's fingerprint by using the first fingerprint sensor 310 in the unfolded state, and may detect and authenticate a user's fingerprint by using the second fingerprint sensor 320 in the folded state, so that the ease of use of the foldable electronic device 200 may be enhanced.

According to various embodiments, although the foldable electronic device 200 has been described as an embodiment in which the first fingerprint sensor 310 (e.g., slim-type optical fingerprint sensor) is disposed on the front surface (e.g., third surface 221) of the second housing 220 and the second fingerprint sensor 320 (e.g., lens-type optical fingerprint sensor) is disposed on the rear surface (e.g., fourth surface 222) of the second housing 220, the first fingerprint sensor 310 (e.g., slim-type optical fingerprint sensor) may be disposed on the front surface (e.g., first surface 211) of the first housing 210 and the second fingerprint sensor 320 (e.g., lens-type optical fingerprint sensor) may be additionally disposed on the rear surface (e.g., second surface 212) of the first housing 210.

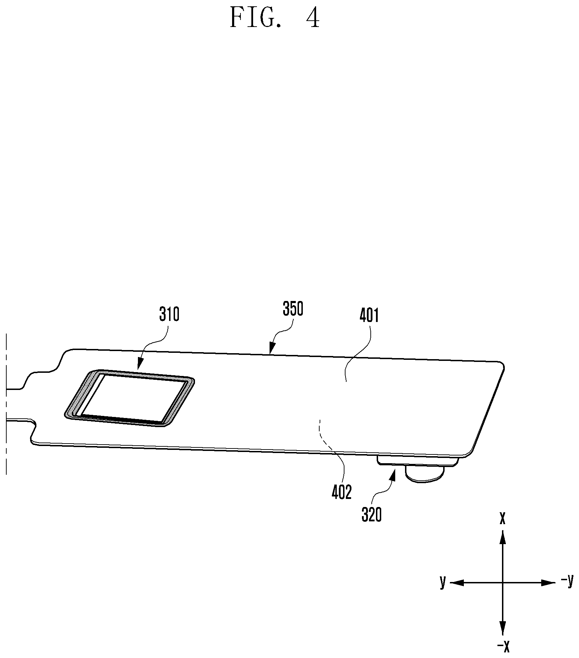

FIG. 4 is a view illustrating one sensor mounting module disposed in the foldable electronic device of FIG. 3 according to various embodiments of the disclosure.

With reference to FIG. 4, the first fingerprint sensor 310 disposed on the front surface (e.g., third surface 221) of the second housing 220 and the second fingerprint sensor 320 disposed on the rear surface (e.g., fourth surface 222) of the second housing 220 may be mounted in a single sensor mounting module 350.

According to an embodiment, the sensor mounting module 350 may include a first surface 401 (e.g., front surface) and a second surface 402 (e.g., rear surface). The first fingerprint sensor 310 may be disposed on the first surface 401 of the sensor mounting module 350. The second fingerprint sensor 320 may be disposed on the second surface 402 of the sensor mounting module 350.

According to various embodiments, the sensor mounting module 350 may include a flexible printed circuit board (FPCB) or an FPCB type RF cable (FRC) to mount the first fingerprint sensor 310 and the second fingerprint sensor 320.

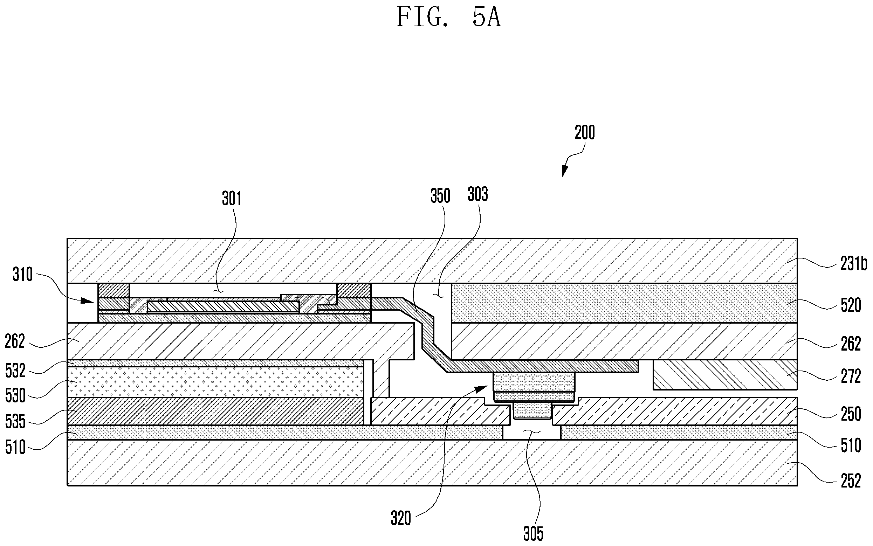

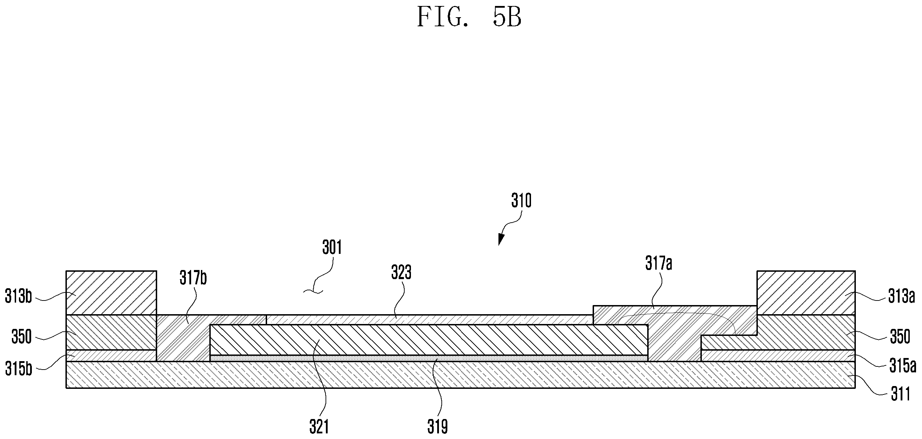

FIG. 5A is a schematic cross-sectional view of the foldable electronic device along line B-B' in FIG. 3 according to various embodiments of the disclosure. FIG. 5B is a schematic cross-sectional view of a first fingerprint sensor shown in FIG. 5A according to various embodiments of the disclosure.

With reference to FIG. 5A, in the foldable electronic device 200 according to various embodiments of the disclosure, the first fingerprint sensor 310 may be disposed between the second display 231b of the second housing 220 and the second support member 262. A first space 301 may be formed in part between the first fingerprint sensor 310 and the second display 231b.

According to various embodiments, a battery 530 (e.g., battery 189 in FIG. 1A) may be coupled to the bottom of the second support member 262 by using an adhesive tape 532. A first protection member 510 may be coupled to the bottom of the battery 530 by using an insulating tape 535. The insulating tape 535 and the first protection member 510 may be disposed between the battery 530 and the sub-display 252.

According to various embodiments, the first protection member 510 may prevent the battery 530 and the sub-display 252 from coming into contact with each other. The first protection member 510 may prevent the sub-display 252 from coming into contact with the battery 530 and may prevent the sub-display 252 from being damaged. The first protection member 510 may include an elastic member such as a cushion layer.

According to an embodiment, in the foldable electronic device 200 according to various embodiments of the disclosure, the second fingerprint sensor 320 may be disposed between the second support member 262 of the second housing 220 and the sub-display 252. A second protection member 520 may be disposed between the second support member 262 and the second display 231b. The second protection member 520 may prevent the second support member 262 and the second display 231b from coming into contact with each other. The second protection member 520 may prevent the second display 231b from coming into contact with the second support member 262 and may prevent the second display 231b from being damaged. The second support member 520 may include an elastic member such as a cushion layer.

According to various embodiments, the first fingerprint sensor 310 and the second protection member 520 may be disposed under the second display 231b. The first fingerprint sensor 310 and the second protection member 520 may be disposed to be spaced apart from each other through a second space 303. The second support member 262 may form a passage (e.g., second space 303) through which the sensor mounting module 350 passes. The second space 303 may be a space through which the sensor mounting module 350 (e.g., FPCB) on which the first fingerprint sensor 310 and the second fingerprint sensor 320 are mounted passes.

According to various embodiments, the second fingerprint sensor 320 may be disposed between the second support member 262 of the second housing 220 and the sub-display 252. The second fingerprint sensor 320 may be disposed between the second rear cover 250 (e.g., second rear cover in FIG. 2C) and the second support member 262. The second printed circuit board 272 (e.g., second printed circuit board in FIG. 2C) may be disposed on one side of the second fingerprint sensor 320. The second printed circuit board 272 may be disposed between the second rear cover 250 and the second support member 262. The second printed circuit board 272 may be electrically connected to the sensor mounting module 350 by using a signal connection member (e.g., FPCB). The processor 120 and the memory 130 illustrated in FIG. 1A may be disposed on the second printed circuit board 272.

According to various embodiments, the first protection member 510 may be disposed between the second rear cover 250 and the sub-display 252. The first protection member 510 may prevent the battery 530 and the sub-display 252 from coming into contact with each other. The first protection member 510 may prevent the sub-display 252 from coming into contact with the second rear cover 250 and may prevent the sub-display 252 from being damaged.

According to various embodiments, the second rear cover 250 and the first protection member 510 may be spaced apart in part from each other, and a third space 305 may be formed in the spaced apart portion. The second fingerprint sensor 320 may be exposed to the sub-display 252 through the third space 305. The second fingerprint sensor 320 may recognize and detect a fingerprint from a user's finger in contact with the sub-display 252, and may authenticate the user of the foldable electronic device 200.

According to various embodiments, the first fingerprint sensor 310 and the second protection member 520 may be disposed on substantially the same plane with the second space 303 interposed therebetween. The battery 530, the second fingerprint sensor 320, and the second printed circuit board 272 may be disposed on substantially the same plane with the second space 303 interposed therebetween. The insulating tape 535 and the second rear cover 250 may be disposed substantially on the same plane.

With reference to FIG. 5B, in the foldable electronic device 200 according to various embodiments of the disclosure, the first fingerprint sensor 310 may be disposed between the second display 231b of the second housing 220 and the second support member 262. The first fingerprint sensor 310 may be integrally configured with the sensor mounting module 350. The embodiment of FIG. 5B may be described with reference to FIG. 5A.

According to an embodiment, the first fingerprint sensor 310 may include a support plate 311, a first elastic member 313a, a second elastic member 313b, a first adhesive layer 315a, a second adhesive layer 315b, a first filling portion 317a, a second filling portion 317b, an adhesive film 319, a prop member 321, and/or a sensing pixel 323.

According to various embodiments, the support plate 311 may be disposed on the second support member 262 of the second housing 220. The support plate 311 may be coupled to the second support member 262 and support the first fingerprint sensor 310 on the second support member 262. The support plate 311 may include stainless use steel (SUS).

According to various embodiments, the first elastic member 313a and the second elastic member 313b may be disposed to be spaced apart from each other through the first space 301 under the second display 231b of the second housing 220. The first elastic member 313a and the second elastic member 313b may prevent the sensor mounting module 350 (e.g., FPCB) from contacting the second display 231b. The first elastic member 313a and the second elastic member 313b may each include a cushion layer having elasticity.

According to various embodiments, the first adhesive layer 315a may be disposed between the first elastic member 313a and the support plate 311. The first adhesive layer 315a may glue a portion of the sensor mounting module 350 and a portion of the support plate 311 together.

According to various embodiments, the second adhesive layer 315b may be disposed between the second elastic member 313b and the support plate 311. The second adhesive layer 315b may glue a portion of the sensor mounting module 350 and a portion of the support plate 311 together.

According to various embodiments, the first filling portion 317a may be disposed on one side of the first elastic member 313a and the first adhesive layer 315a. The second filling portion 317b may be disposed on one side of the second adhesive layer 315b. The first filling portion 317a and the second filling portion 317b may include a dielectric or an insulator.

According to various embodiments, the adhesive film 319 may be disposed between the first filling portion 317a and the second filling portion 317b. The adhesive film 319 may include a die attach film (DAF). The adhesive film 319 may glue a portion of the support plate 311 and the prop member 321 (e.g., die).

According to various embodiments, the prop member 321 (e.g., die) may be disposed on the adhesive film 319. The prop member 321 may be coupled to a portion of the support plate 311 by using the adhesive film 319. The prop member 321 may support the sensing pixel 323.

According to various embodiments, the sensing pixel 323 may be disposed on the prop member 321. The sensing pixel 323 may be exposed to the second display 231b of the second housing 220 through the first space 301. The sensing pixel 323 of the first fingerprint sensor 310 may recognize and detect a fingerprint of a user's finger in contact with the second display 231b and authenticate the user of the foldable electronic device 200.

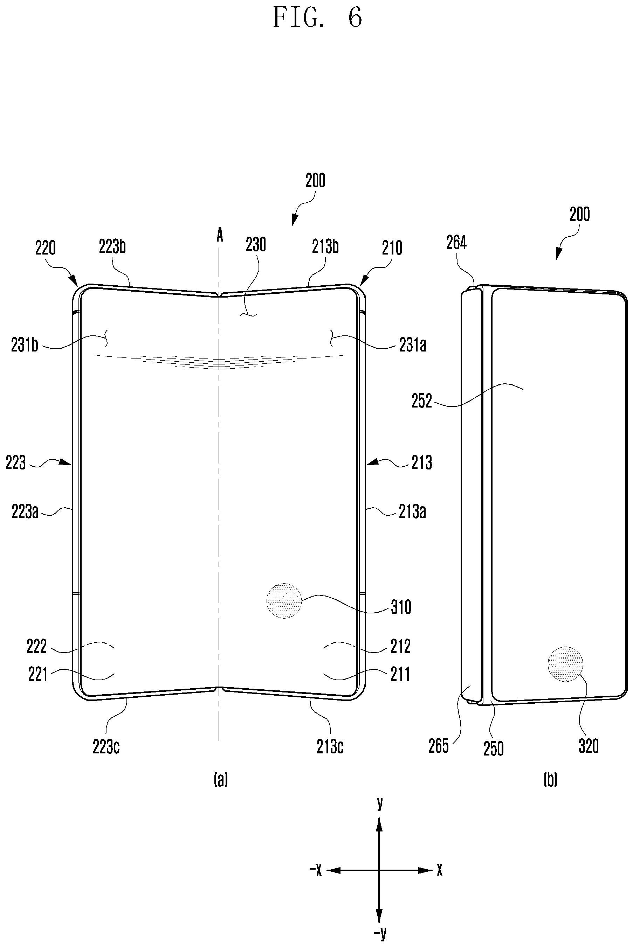

FIG. 6 is a view illustrating the arrangement of the first fingerprint sensor and the second fingerprint sensor in the foldable electronic device according to various embodiments of the disclosure. For example, part (a) of FIG. 6 is a view of the foldable electronic device in a substantially unfolded state according to various embodiments of the disclosure. Part (b) of FIG. 6 is a view of the foldable electronic device in a substantially folded state according to various embodiments of the disclosure.

According to various embodiments, the embodiments of the foldable electronic device 200 illustrated in parts (a) and (b) of FIG. 6 may include the embodiments illustrated in parts (a) and (b) of FIG. 3. The embodiments of the foldable electronic device 200 illustrated in parts (a) and (b) of FIG. 6 may be included in the embodiments illustrated in parts (a) and (b) of FIG. 3.

In the description of the following embodiments, the same reference symbols may be assigned to the components substantially the same as those of the embodiments illustrated in FIGS. 1A to 3 described above, and repeated descriptions about the functions thereof may be omitted.

With reference to parts (a) and (b) of FIG. 6, in the foldable electronic device 200 according to various embodiments of the disclosure, the first fingerprint sensor 310 (e.g., slim-type optical fingerprint sensor) may be disposed on the first surface 211 of the first housing 210. The first fingerprint sensor 310 may be disposed on the rear surface of the first display 231a of the first housing 210. The first fingerprint sensor 310 may be disposed between the first display 231a of the first housing 210 and the first support member (e.g., first support member 261 in FIG. 2C).

According to an embodiment, in the foldable electronic device 200, the second fingerprint sensor 320 (e.g., lens-type optical fingerprint sensor) may be disposed on the fourth surface 222 of the second housing 220. The second fingerprint sensor 320 may be disposed between the second support member (e.g., second support member 262 in FIG. 2C) of the second housing 220 and the sub-display 252.

According to various embodiments, in a situation where the first fingerprint sensor 310 (e.g., slim-type optical fingerprint sensor) is disposed on the front surface (e.g., first surface 211) of the first housing 210 and the second fingerprint sensor 320 is disposed on the rear surface (e.g., fourth surface 222) of the second housing 220, when the foldable electronic device 200 is in the unfolded state, the foldable electronic device 200 may recognize and detect a user's fingerprint and perform authentication by using the first fingerprint sensor 310 disposed on the first surface 211 of the first housing 210.

According to various embodiments, in a situation where the first fingerprint sensor 310 is disposed on the front surface (e.g., first surface 211) of the first housing 210 and the second fingerprint sensor 320 is disposed on the rear surface (e.g., fourth surface 222) of the second housing 220, when the foldable electronic device 200 is in the folded state, the foldable electronic device 200 may recognize and detect a user's fingerprint and perform authentication by using the second fingerprint sensor 320 disposed on the fourth surface 222 of the second housing 220.

According to various embodiments, although the foldable electronic device 200 has been described as an embodiment in which the first fingerprint sensor 310 is disposed on the front surface (e.g., first surface 211) of the first housing 220 and the second fingerprint sensor 320 is disposed on the rear surface (e.g., fourth surface 222) of the second housing 220, the first fingerprint sensor 310 may be disposed on the front surface (e.g., second surface 221) of the second housing 220 and the second fingerprint sensor 320 may be disposed on the rear surface (e.g., second surface 212) of the first housing 210.

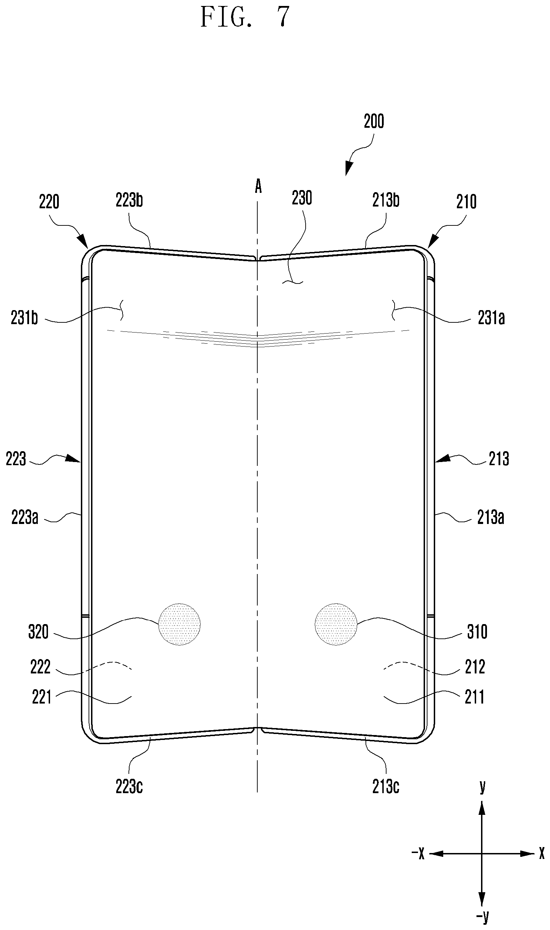

FIG. 7 is a view illustrating the arrangement of the first fingerprint sensor and the second fingerprint sensor when the foldable electronic device is in the unfolded state according to various embodiments of the disclosure.

According to various embodiments, the embodiments of the foldable electronic device 200 illustrated in FIG. 7 may include the embodiments illustrated in parts (a) and (b) of FIG. 3 and parts (a) and (b) of FIG. 6.

In the description of the following embodiments, the same reference symbols may be assigned to the components substantially the same as those of the embodiments illustrated in FIGS. 1A to 6 described above, and repeated descriptions about the functions thereof may be omitted.

With reference to FIG. 7, in the foldable electronic device 200 according to various embodiments of the disclosure, the first fingerprint sensor 310 may be disposed on the first surface 211 of the first housing 210. The first fingerprint sensor 310 may be disposed on the rear surface of the first display 231a of the first housing 210. The first fingerprint sensor 310 may be disposed between the first display 231a of the first housing 210 and the first support member (e.g., first support member 261 in FIG. 2C). The first fingerprint sensor 310 may include, for example, a slim-type optical fingerprint sensor.

According to an embodiment, in the foldable electronic device 200, the second fingerprint sensor 320 may be disposed on the third surface 221 of the second housing 220. The second fingerprint sensor 320 may be disposed on the rear surface of the second display 231b of the second housing 220. The second fingerprint sensor 320 may be disposed between the second display 231b of the second housing 220 and the second support member (e.g., second support member 262 in FIG. 2C). The second fingerprint sensor 320 may include, for example, a slim-type optical fingerprint sensor.

According to various embodiments, in a situation where the first fingerprint sensor 310 (e.g., slim-type optical fingerprint sensor) is disposed on the front surface (e.g., first surface 211) of the first housing 210 and the second fingerprint sensor 320 is disposed on the front surface (e.g., third surface 221) of the second housing 220, when the foldable electronic device 200 is in the unfolded state, the foldable electronic device 200 may recognize and detect a user's fingerprint and perform authentication by using the first fingerprint sensor 310 disposed on the first surface 211 of the first housing 210 and/or the second fingerprint sensor 320 disposed on the third surface 221 of the second housing 220.

According to various embodiments, the foldable electronic device 200 may recognize and detect a user's fingerprint and perform user authentication by substantially simultaneously using the first fingerprint sensor 310 and the second fingerprint sensor 320, so that the security of the foldable electronic device 200 may be enhanced. For example, the foldable electronic device 200 may perform user authentication for the foldable electronic device 200 by recognizing and detecting the fingerprint of a user's right finger (e.g., thumb) through the first fingerprint sensor 310 disposed on the first surface 211 of the first housing 210, and by recognizing and detecting the fingerprint of a user's left finger (e.g., thumb) through the second fingerprint sensor 320 disposed on the third surface 221 of the second housing 220.

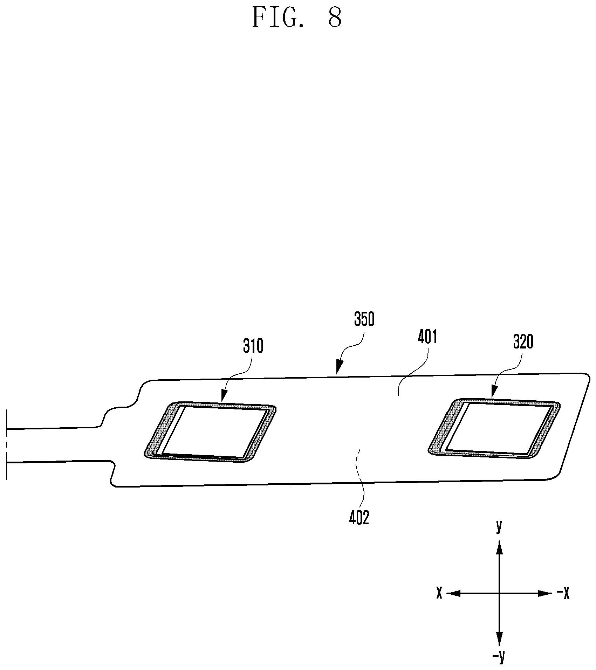

FIG. 8 is a view illustrating one sensor mounting module disposed in the foldable electronic device of FIG. 7 according to various embodiments of the disclosure.

With reference to FIG. 8, the first fingerprint sensor 310 disposed on the front surface (e.g., first surface 211) of the first housing 210 and the second fingerprint sensor 320 disposed on the front surface (e.g., third surface 221) of the second housing 220 may be mounted on a single sensor mounting module 350.

According to an embodiment, the sensor mounting module 350 may include a first surface 401 (e.g., front surface) and a second surface 402 (e.g., rear surface). The first fingerprint sensor 310 and the second fingerprint sensor 320 may be disposed to be spaced apart on the first surface 401 of the sensor mounting module 350.

According to various embodiments, the sensor mounting module 350 may include a flexible printed circuit board (FPCB) or an FPCB type RF cable (FRC) to mount the first fingerprint sensor 310 and the second fingerprint sensor 320. The first fingerprint sensor 310 may include, for example, a slim-type optical fingerprint sensor. The second fingerprint sensor 320 may include, for example, a slim-type optical fingerprint sensor.

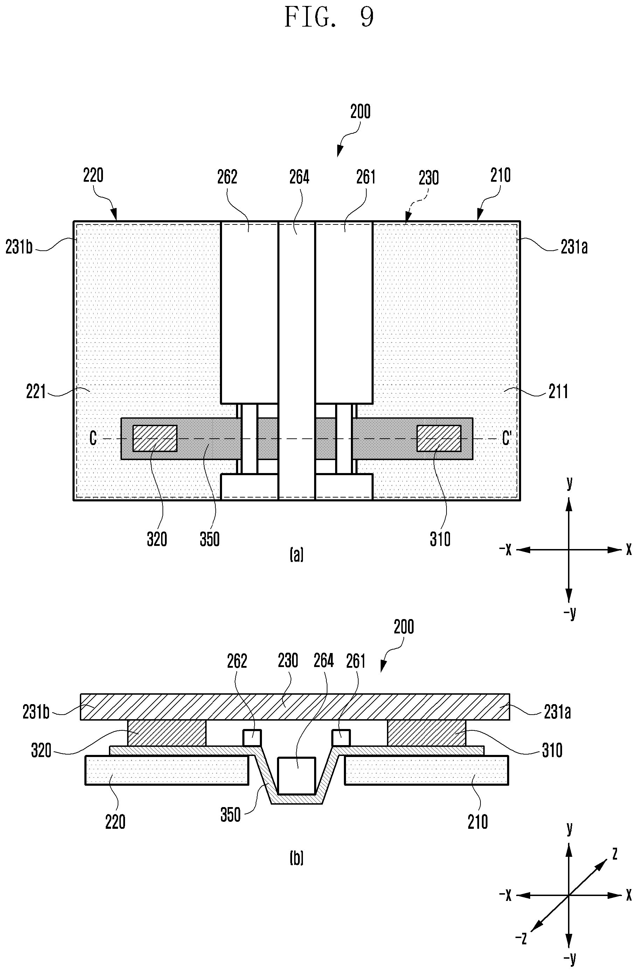

Part (a) of FIG. 9 is a schematic perspective view of the foldable electronic device of FIG. 7 when viewed from the front according to various embodiments of the disclosure. Part (b) of FIG. 9 is a schematic cross-sectional view along line C-C' in part (a) of FIG. 9 according to various embodiments of the disclosure.

With reference to parts (a) and (b) of FIG. 9, in the foldable electronic device 200 according to various embodiments of the disclosure, the first fingerprint sensor 310 may be disposed on the first surface 211 of the first housing 210. The first fingerprint sensor 310 may be disposed on the rear surface of the first display 231a of the first housing 210. The first fingerprint sensor 310 may be disposed between the first housing 210 and the first display 231a. In the foldable electronic device 200, the second fingerprint sensor 320 may be disposed on the third surface 221 of the second housing 220. The second fingerprint sensor 320 may be disposed on the rear surface of the second display 231b of the second housing 220. The second fingerprint sensor 320 may be disposed between the second housing 220 and the second display 231b.

According to an embodiment, the first fingerprint sensor 310 disposed in the first housing 210 and the second fingerprint sensor 320 may be mounted to be spaced apart on the first surface 401 of the sensor mounting module 350 (e.g., FPCB). The sensor mounting module 350 may be disposed across the first support member 261 of the first housing 210, the hinge module 264, and the second support member 262 of the second housing 220.

FIG. 10 is a view illustrating an embodiment in which the first fingerprint sensor and the second fingerprint sensor are disposed in the first housing or second housing of the foldable electronic device according to various embodiments of the disclosure.

According to various embodiments, the above-described embodiments illustrated in FIGS. 2A to 9 may be included in the foldable electronic device 200 of FIG. 10.

With reference to FIG. 10, in the foldable electronic device 200 according to various embodiments of the disclosure, the first fingerprint sensor 310 and the second fingerprint sensor 320 may be disposed in the first housing 210 or the second housing 220. The first fingerprint sensor 310 and the second fingerprint sensor 320 may be disposed in one sensor mounting module 350. The first fingerprint sensor 310 may include, for example, a slim-type optical fingerprint sensor. The second fingerprint sensor 320 may include, for example, a slim-type optical fingerprint sensor.

According to various embodiments, the foldable electronic device 200 may recognize and detect a user's fingerprint and perform user authentication by using the first fingerprint sensor 310 and/or the second fingerprint sensor 320 disposed in the first housing 210 (or, second housing 220).

According to various embodiments, the foldable electronic device 200 may recognize and detect a user's fingerprint and perform user authentication about the foldable electronic device 200 by using the first fingerprint sensor 310 disposed in the first housing 210 (or, second housing 220). The foldable electronic device 200 may recognize and detect a user's fingerprint and perform user authentication about the foldable electronic device 200 by using the second fingerprint sensor 320 disposed in the first housing 210 (or, second housing 220). The foldable electronic device 200 may recognize and detect a user's fingerprint and perform user authentication about the foldable electronic device 200 by using the first fingerprint sensor 310 and the second fingerprint sensor 320 disposed in the first housing 210 (or, second housing 220).

The embodiment of FIG. 10 has described an embodiment where the first fingerprint sensor 310 and the second fingerprint sensor 320 are disposed in the first housing 210 (or, second housing 220) of the foldable electronic device 200. In variations that are not within the scope of the claims, the first fingerprint sensor 310 and the second fingerprint sensor 320 may also be applied to a bar-type electronic device (e.g., smartphone).

According to various embodiments of the disclosure described above, a plurality of fingerprint sensors (e.g., first fingerprint sensor 310 and second fingerprint sensor 320) are mounted on one sensor mounting module 350, the first fingerprint sensor 310 and the second fingerprint sensor 320 are disposed on the front surface and/or the rear surface of the first housing 210 and/or the second housing 220, and hence the foldable electronic device 200 is allowed to recognize and detect a user's fingerprint and perform authentication in the folded state and/or in the unfolded state, so that the ease of use and security of the foldable electronic device 200 can be enhanced.

A foldable electronic device 200 according to various embodiments of the disclosure may include: a hinge module 264 coupled at least in part between a first support member 261 and a second support member 262; a first housing 210 coupled at least in part to a first side of the hinge module 264 by using the first support member 261; a second housing 220 that is coupled at least in part to a second side of the hinge module 264 by using the second support member 262 and is configured to be unfolded and folded with the first housing 210 by using the hinge module 264; a flexible display 230 including a first display 231a disposed on a first surface 211 of the first housing 210, and a second display 231b disposed on a third surface 221 of the second housing 210; a sensor mounting module 350 disposed in the first housing 210 and the second housing 220 across the inside of the hinge module; a first fingerprint sensor 310 that is mounted on a first surface 401 of the sensor mounting module 350 and is disposed between the third surface 221 of the second housing 220 and the second display 231b; and a second fingerprint sensor 320 that is mounted on a second surface 402 of the sensor mounting module 350 and is disposed on a fourth surface 222 of the second housing 220.

According to various embodiments, in the foldable electronic device 200, a second rear cover 250 may be disposed on the fourth surface 222 of the second housing 220, and a sub-display 252 may be disposed in the second rear cover 250.

According to various embodiments, the second fingerprint sensor 320 may be disposed between the second rear cover 250 and the sub-display 252.

According to various embodiments, the first fingerprint sensor 310 may be disposed between the second display 231b and the second support member 262.

According to various embodiments, the second fingerprint sensor 320 may be disposed between the second support member 262 and the sub-display 252.

According to various embodiments, the first fingerprint sensor 310 may include a slim-type optical fingerprint sensor, and the second fingerprint sensor 320 may include a lens-type optical fingerprint sensor.

According to various embodiments, the first fingerprint sensor 310 may be configured to recognize and detect a user's fingerprint when the foldable electronic device 200 is in an unfolded state, and the second fingerprint sensor 320 may be configured to recognize and detect a user's fingerprint when the foldable electronic device 200 is in a folded state.

According to various embodiments, the sensor mounting module 350 may include a flexible printed circuit board (FPCB) or an FPCB type RF cable (FRC).

According to various embodiments, a battery 530 may be disposed under the second support member 262.

A foldable electronic device 200 according to various embodiments of the disclosure may include: a hinge module 264 coupled at least in part between a first support member 261 and a second support member 262; a first housing 210 coupled at least in part to a first side of the hinge module 264 by using the first support member 261; a second housing 220 that is coupled at least in part to a second side of the hinge module 264 by using the second support member 262 and is configured to be unfolded and folded with the first housing 210 by using the hinge module 264; a flexible display 230 including a first display 231a disposed on a first surface 211 of the first housing 210, and a second display 231b disposed on a third surface 221 of the second housing 210; a sensor mounting module 350 disposed in the first housing 210 and the second housing 220 across the inside of the hinge module; a first fingerprint sensor 310 that is mounted on a first surface 401 of the sensor mounting module 350 and is disposed between the first surface 211 of the first housing 210 and the first display 231a; and a second fingerprint sensor 320 that is mounted on the first surface 401 of the sensor mounting module 350 and is disposed between the third surface 221 of the second housing 220 and the second display 231b.

According to various embodiments, the first fingerprint sensor 310 may be disposed between the first display 231a and the first support member 261.

According to various embodiments, the second fingerprint sensor 320 may be disposed between the second display 231b and the second support member 262.

According to various embodiments, the first fingerprint sensor 310 may include a slim-type optical fingerprint sensor, and the second fingerprint sensor 320 may include a slim-type optical fingerprint sensor.

According to various embodiments, when the foldable electronic device 200 is in the unfolded state, it may be configured to recognize and detect a fingerprint by using the first fingerprint sensor 310 and/or the second fingerprint sensor 320.

According to various embodiments, when the foldable electronic device 200 is in the unfolded state, it may be configured to perform authentication of the foldable electronic device 200 by using the first fingerprint sensor 310 to recognize and detect a fingerprint of a user's right finger and by using the second fingerprint sensor 320 to recognize and detect a fingerprint of a user's left finger.

According to various embodiments, the sensor mounting module 350 may include a flexible printed circuit board (FPCB) or an FPCB type RF cable (FRC).

A foldable electronic device 200 according to various embodiments of the disclosure may include: a hinge module 264 coupled at least in part between a first support member 261 and a second support member 262; a first housing 210 coupled at least in part to a first side of the hinge module 264 by using the first support member 261; a second housing 220 that is coupled at least in part to a second side of the hinge module 264 by using the second support member 262 and is configured to be unfolded and folded with the first housing 210 by using the hinge module 264; a flexible display 230 including a first display 231a disposed on a first surface 211 of the first housing 210, and a second display 231b disposed on a third surface 221 of the second housing 210; and a sensor mounting module 350 including a first fingerprint sensor 310 and a second fingerprint sensor 320, wherein the first fingerprint sensor 310 and the second fingerprint sensor 320 may be disposed between the first surface 211 of the first housing 210 and the first display 231a or be disposed between the third surface 221 of the second housing 220 and the second display 231b.

According to various embodiments, the first fingerprint sensor 310 and the second fingerprint sensor 320 may be disposed between the first display 231a and the first support member 261, or be disposed between the second display 231b and the second support member 262.

According to various embodiments, the first fingerprint sensor 310 may include a slim-type optical fingerprint sensor, and the second fingerprint sensor 320 may include a slim-type optical fingerprint sensor.

According to various embodiments, when the foldable electronic device 200 is in the unfolded state, it may be configured to recognize and detect a fingerprint by using the first fingerprint sensor 310 and the second fingerprint sensor 320.

Hereinabove, the disclosure has been described with reference to various embodiments thereof, but it should be understood by those skilled in the art that many variations and modifications of the basic inventive concept described herein will still fall within the scope of the disclosure.

## Claims

1. A foldable electronic device (200) comprising:
a hinge module (264) coupled at least in part between a first support member (261) and a second support member (262);
a first housing (210) coupled at least in part to a first side of the hinge module (264) by using the first support member (261);
a second housing (220) that is coupled at least in part to a second side of the hinge module (264) by using the second support member (262) and is configured to be unfolded and folded with the first housing (210) by using the hinge module (264);
a flexible display (230) including a first display (231a) disposed on a first surface (211) of the first housing (210), and a second display (231b) disposed on a third surface (221) of the second housing (220); **characterised by**
a sensor mounting module (350) disposed in the second housing (220);
a first fingerprint sensor (310) that is mounted on a first surface (401) of the sensor mounting module (350) and is disposed between the third surface (221) of the second housing and the second display; and
a second fingerprint sensor (320) that is mounted on a second surface (402) of the sensor mounting module (350) opposite to the first surface (401) of the sensor mounting module (350) and is disposed on a fourth surface (222) of the second housing opposite to the third surface (221) of the second housing (220).

2. The foldable electronic device of claim 1, wherein:
a second rear cover (250) is disposed on the fourth surface (222) of the second housing (220); and
a sub-display (252) is disposed in the second rear cover (250).

3. The foldable electronic device of claim 2, wherein the second fingerprint sensor (320) is disposed between the second rear cover (250) and the sub-display (252).

4. The foldable electronic device of claim 1, wherein the first fingerprint sensor (310) is disposed between the second display (231b) and the second support member (262).

5. The foldable electronic device of claim 3, wherein the second fingerprint sensor (320) is disposed between the second support member (262) and the sub-display (252).

6. The foldable electronic device of claim 1, wherein:
the first fingerprint sensor (310) includes a slim-type optical fingerprint sensor; and
the second fingerprint sensor (320) includes a lens-type optical fingerprint sensor.

7. The foldable electronic device of claim 1, wherein:
the first fingerprint sensor (310) is constituted to recognize and detect a user's fingerprint when the foldable electronic device (200) is in an unfolded state; and
the second fingerprint sensor (320) is constituted to recognize and detect a user's fingerprint when the foldable electronic device (200) is in a folded state.

8. The foldable electronic device of claim 1, wherein the sensor mounting module (350) includes a flexible printed circuit board, FPCB, or an FPCB type RF cable, FRC.

9. The foldable electronic device of claim 1, wherein a battery (530) is disposed under the second support member (262).

10. A foldable electronic device (200) comprising:
a hinge module (264) coupled at least in part between a first support member (261) and a second support member (262);
a first housing (210) coupled at least in part to a first side of the hinge module (264) by using the first support member (261);
a second housing (220) that is coupled at least in part to a second side of the hinge module (264) by using the second support member (262) and is constituted to be unfolded and folded with the first housing (210) by using the hinge module (264);
a flexible display (230) including a first display (231a) disposed on a first surface (211) of the first housing (210), and a second display (231b) disposed on a third surface (221) of the second housing (220); **characterised by**
a sensor mounting module (350) disposed in the first housing (210) and the second housing (220) across an inside of the hinge module (264);
a first fingerprint sensor (310) that is mounted on a first surface (401) of the sensor mounting module (350) and is disposed between the first surface (211) of the first housing (210) and the first display (231a); and
a second fingerprint sensor (320) that is mounted on the first surface (401) of the sensor mounting module (350) and is disposed between the third surface (221) of the second housing (220) and the second display (231b).

11. The foldable electronic device of claim 10, wherein the first fingerprint sensor (310) is disposed between the first display (231a) and the first support member (261), and the second fingerprint sensor (320) is disposed between the second display (231b) and the second support member (262).

12. The foldable electronic device of claim 10, wherein:
the first fingerprint sensor (310) includes a slim-type optical fingerprint sensor; and
the second fingerprint sensor (320) includes a slim-type optical fingerprint sensor.

13. The foldable electronic device of claim 10, wherein, in an unfolded state, the foldable electronic device (200) is constituted to recognize and detect a fingerprint by using the first fingerprint sensor (310) and/or the second fingerprint sensor (320).

14. The foldable electronic device of claim 10, wherein, in an unfolded state, the foldable electronic device (200) is configured to perform authentication of the foldable electronic device by using the first fingerprint sensor (310) to recognize and detect a fingerprint of a user's right finger and by using the second fingerprint sensor (320) to recognize and detect a fingerprint of a user's left finger.

15. The foldable electronic device of claim 10, wherein the sensor mounting module (350) includes a flexible printed circuit board, FPCB, or an FPCB type RF cable, FRC.

## Patentansprüche

1. Faltbare elektronische Vorrichtung (200), die Folgendes umfasst:
ein Scharniermodul (264), das zumindest teilweise zwischen einem ersten Stützelement (261) und einem zweiten Stützelement (262) gekoppelt ist;
ein erstes Gehäuse (210), das zumindest teilweise mit einer ersten Seite des Scharniermoduls (264) unter Verwendung des ersten Stützelements (261) gekoppelt ist;
ein zweites Gehäuse (220), das zumindest teilweise mit einer zweiten Seite des Scharniermoduls (264) unter Verwendung des zweiten Stützelements (262) gekoppelt ist und dazu ausgestaltet ist, mit dem ersten Gehäuse (210) unter Verwendung des Scharniermoduls (264) aufgefaltet und zusammengefaltet werden zu können;
eine flexible Anzeige (230) mit einer ersten Anzeige (231a), die auf einer ersten Fläche (211) des ersten Gehäuses (210) angeordnet ist, und einer zweiten Anzeige (231b), die auf einer dritten Fläche (221) des zweiten Gehäuses (220) angeordnet ist; **gekennzeichnet durch**
ein Sensorbefestigungsmodul (350), das in dem zweiten Gehäuse (220) angeordnet ist;
einen ersten Fingerabdrucksensor (310), der auf einer ersten Fläche (401) des Sensorbefestigungsmoduls (350) befestigt ist und zwischen der dritten Fläche (221) des zweiten Gehäuses und der zweiten Anzeige angeordnet ist; und
einen zweiten Fingerabdrucksensor (320), der auf einer zweiten Fläche (402) des Sensorbefestigungsmoduls (350) gegenüber der ersten Fläche (401) des Sensorbefestigungsmoduls (350) befestigt ist und auf einer vierten Fläche (222) des zweiten Gehäuses gegenüber der dritten Fläche (221) des zweiten Gehäuses (220) angeordnet ist.

2. Faltbare elektronische Vorrichtung nach Anspruch 1, wobei:
eine zweite rückseitige Abdeckung (250) auf der vierten Fläche (222) des zweiten Gehäuses (220) angeordnet ist; und
eine Unteranzeige (252) in der zweiten rückseitigen Abdeckung (250) angeordnet ist.

3. Faltbare elektronische Vorrichtung nach Anspruch 2, wobei der zweite Fingerabdrucksensor (320) zwischen der zweiten rückseitigen Abdeckung (250) und der Unteranzeige (252) angeordnet ist.

4. Faltbare elektronische Vorrichtung nach Anspruch 1, wobei der erste Fingerabdrucksensor (310) zwischen der zweiten Anzeige (231b) und dem zweiten Stützelement (262) angeordnet ist.

5. Faltbare elektronische Vorrichtung nach Anspruch 3, wobei der zweite Fingerabdrucksensor (320) zwischen dem zweiten Stützelement (262) und der Unteranzeige (252) angeordnet ist.

6. Faltbare elektronische Vorrichtung nach Anspruch 1, wobei:
der erste Fingerabdrucksensor (310) einen optischen Fingerabdrucksensor vom schlanken Typ umfasst; und
der zweite Fingerabdrucksensor (320) einen optischen Fingerabdrucksensor vom Linsentyp umfasst.

7. Faltbare elektronische Vorrichtung nach Anspruch 1, wobei:
der erste Fingerabdrucksensor (310) dazu aufgebaut ist, den Fingerabdruck eines Benutzers zu erkennen und zu erfassen, wenn sich die faltbare elektronische Vorrichtung (200) in einem aufgefalteten Zustand befindet; und
der zweite Fingerabdrucksensor (320) dazu aufgebaut ist, den Fingerabdruck eines Benutzers zu erkennen und zu erfassen, wenn sich die faltbare elektronische Vorrichtung (200) in einem zusammengefalteten Zustand befindet.

8. Faltbare elektronische Vorrichtung nach Anspruch 1, wobei das Sensorbefestigungsmodul (350) eine flexible Leiterplatte, *flexible printed circuit board -* FPCB, oder ein HF-Kabel vom FPCB-Typ, FRC, umfasst.

9. Faltbare elektronische Vorrichtung nach Anspruch 1, wobei eine Batterie (530) unter dem zweiten Stützelement (262) angeordnet ist.

10. Faltbare elektronische Vorrichtung (200), die Folgendes umfasst:
ein Scharniermodul (264), das zumindest teilweise zwischen einem ersten Stützelement (261) und einem zweiten Stützelement (262) gekoppelt ist;
ein erstes Gehäuse (210), das zumindest teilweise mit einer ersten Seite des Scharniermoduls (264) unter Verwendung des ersten Stützelements (261) gekoppelt ist;
ein zweites Gehäuse (220), das zumindest teilweise mit einer zweiten Seite des Scharniermoduls (264) unter Verwendung des zweiten Stützelements (262) gekoppelt ist und dazu aufgebaut ist, mit dem ersten Gehäuse (210) unter Verwendung des Scharniermoduls (264) aufgefaltet und zusammengefaltet zu werden;
eine flexible Anzeige (230) mit einer ersten Anzeige (231a), die auf einer ersten Fläche (211) des ersten Gehäuses (210) angeordnet ist, und einer zweiten Anzeige (231b), die auf einer dritten Fläche (221) des zweiten Gehäuses (220) angeordnet ist; **gekennzeichnet durch**
ein Sensorbefestigungsmodul (350), das in dem ersten Gehäuse (210) und dem zweiten Gehäuse (220) über eine Innenseite des Scharniermoduls (264) hinweg angeordnet ist;
einen ersten Fingerabdrucksensor (310), der auf einer ersten Fläche (401) des Sensorbefestigungsmoduls (350) befestigt ist und zwischen der ersten Fläche (211) des ersten Gehäuses (210) und der ersten Anzeige (231a) angeordnet ist; und
einen zweiten Fingerabdrucksensor (320), der auf der ersten Fläche (401) des Sensorbefestigungsmoduls (350) befestigt ist und zwischen der dritten Fläche (221) des zweiten Gehäuses (220) und der zweiten Anzeige (231b) angeordnet ist.

11. Faltbare elektronische Vorrichtung nach Anspruch 10, wobei der erste Fingerabdrucksensor (310) zwischen der ersten Anzeige (231a) und dem ersten Stützelement (261) angeordnet ist und der zweite Fingerabdrucksensor (320) zwischen der zweiten Anzeige (231b) und dem zweiten Stützelement (262) angeordnet ist.

12. Faltbare elektronische Vorrichtung nach Anspruch 10, wobei:
der erste Fingerabdrucksensor (310) einen optischen Fingerabdrucksensor vom schlanken Typ umfasst; und
der zweite Fingerabdrucksensor (320) einen optischen Fingerabdrucksensor vom schlanken Typ umfasst.

13. Faltbare elektronische Vorrichtung nach Anspruch 10, wobei die faltbare elektronische Vorrichtung (200) in einem aufgefalteten Zustand dazu aufgebaut ist, einen Fingerabdruck unter Verwendung des ersten Fingerabdrucksensors (310) und/oder des zweiten Fingerabdrucksensors (320) zu erkennen und zu erfassen.

14. Faltbare elektronische Vorrichtung nach Anspruch 10, wobei die faltbare elektronische Vorrichtung (200) dazu ausgestaltet ist, in einem aufgefalteten Zustand die Authentifizierung der faltbaren elektronischen Vorrichtung unter Verwendung des ersten Fingerabdrucksensors (310) zum Erkennen und Erfassen eines Fingerabdrucks des rechten Fingers eines Benutzers und unter Verwendung des zweiten Fingerabdrucksensors (320) zum Erkennen und Erfassen eines Fingerabdrucks des linken Fingers eines Benutzers durchzuführen.

15. Faltbare elektronische Vorrichtung nach Anspruch 10, wobei das Sensorbefestigungsmodul (350) eine flexible Leiterplatte, *flexible printed circuit board -* FPCB, oder ein HF-Kabel vom FPCB-Typ, FRC, umfasst.

## Revendications

1. Dispositif électronique pliable (200) comprenant :
un module de charnière (264) couplé au moins en partie entre un premier élément de support (261) et un second élément de support (262) ;
un premier logement (210) couplé au moins en partie à un premier côté du module de charnière (264) en utilisant le premier élément de support (261) ;
un second logement (220) qui est couplé au moins en partie à un second côté du module de charnière (264) en utilisant le second élément de support (262) et est conçu pour être déplié et plié avec le premier logement (210) en utilisant le module de charnière (264) ;
un affichage flexible (230) comportant un premier affichage (231a) disposé sur une première surface (211) du premier logement (210), et un second affichage (231b) disposé sur une troisième surface (221) du second logement (220) ; **caractérisé par**
un module de montage de capteur (350) disposé dans le second logement (220) ;
un premier capteur d'empreintes digitales (310) qui est monté sur une première surface (401) du module de montage de capteur (350) et est disposé entre la troisième surface (221) du second logement et le second affichage ; et
un second capteur d'empreintes digitales (320) qui est monté sur une deuxième surface (402) du module de montage de capteur (350) opposée à la première surface (401) du module de montage de capteur (350) et est disposé sur une quatrième surface (222) du second logement opposée à la troisième surface (221) du second logement (220).

2. Dispositif électronique pliable selon la revendication 1, dans lequel :
un second couvercle arrière (250) est disposé sur la quatrième surface (222) du second logement (220) ; et
un sous-affichage (252) est disposé dans le second couvercle arrière (250).

3. Dispositif électronique pliable selon la revendication 2, dans lequel le second capteur d'empreintes digitales (320) est disposé entre le second couvercle arrière (250) et le sous-affichage (252).

4. Dispositif électronique pliable selon la revendication 1, dans lequel le premier capteur d'empreintes digitales (310) est disposé entre le second affichage (231b) et le second élément de support (262).

5. Dispositif électronique pliable selon la revendication 3, dans lequel le second capteur d'empreintes digitales (320) est disposé entre le second élément de support (262) et le sous-affichage (252).

6. Dispositif électronique pliable selon la revendication 1, dans lequel :
le premier capteur d'empreintes digitales (310) comporte un capteur d'empreintes digitales optique de type mince ; et
le second capteur d'empreintes digitales (320) comporte un capteur d'empreintes digitales optique de type lentille.

7. Dispositif électronique pliable selon la revendication 1, dans lequel :
le premier capteur d'empreintes digitales (310) est constitué pour reconnaître et détecter l'empreinte digitale d'un utilisateur lorsque le dispositif électronique pliable (200) est dans un état déplié ; et
le second capteur d'empreintes digitales (320) est constitué pour reconnaître et détecter l'empreinte digitale d'un utilisateur lorsque le dispositif électronique pliable (200) est dans un état plié.

8. Dispositif électronique pliable selon la revendication 1, dans lequel le module de montage de capteur (350) comporte une carte de circuit imprimé flexible, *flexible printed circuit board -* FPCB, ou un câble RF de type FPCB, FRC.

9. Dispositif électronique pliable selon la revendication 1, dans lequel une batterie (530) est disposée sous le second élément de support (262).

10. Dispositif électronique pliable (200) comprenant :
un module de charnière (264) couplé au moins en partie entre un premier élément de support (261) et un second élément de support (262) ;
un premier logement (210) couplé au moins en partie à un premier côté du module de charnière (264) en utilisant le premier élément de support (261) ;
un second logement (220) qui est couplé au moins en partie à un second côté du module de charnière (264) en utilisant le second élément de support (262) et est constitué pour être déplié et plié avec le premier logement (210) en utilisant le module de charnière (264) ;
un affichage flexible (230) comportant un premier affichage (231a) disposé sur une première surface (211) du premier logement (210), et un second affichage (231b) disposé sur une troisième surface (221) du second logement (220) ; **caractérisé par**
un module de montage de capteur (350) disposé dans le premier logement (210) et le second logement (220) à l'intérieur du module de charnière (264) ;
un premier capteur d'empreintes digitales (310) qui est monté sur une première surface (401) du module de montage de capteur (350) et est disposé entre la première surface (211) du premier logement (210) et le premier affichage (231a) ; et
un second capteur d'empreintes digitales (320) qui est monté sur la première surface (401) du module de montage de capteur (350) et est disposé entre la troisième surface (221) du second logement (220) et le second affichage (231b).

11. Dispositif électronique pliable selon la revendication 10, dans lequel le premier capteur d'empreintes digitales (310) est disposé entre le premier affichage (231a) et le premier élément de support (261), et le second capteur d'empreintes digitales (320) est disposé entre le second affichage (231b) et le second élément de support (262).

12. Dispositif électronique pliable selon la revendication 10, dans lequel :
le premier capteur d'empreintes digitales (310) comporte un capteur d'empreintes digitales optique de type mince ; et
le second capteur d'empreintes digitales (320) comporte un capteur d'empreintes digitales optique de type mince.

13. Dispositif électronique pliable selon la revendication 10, dans lequel, dans un état déplié, le dispositif électronique pliable (200) est constitué pour reconnaître et détecter une empreinte digitale en utilisant le premier capteur d'empreintes digitales (310) et/ou le second capteur d'empreintes digitales (320).

14. Dispositif électronique pliable selon la revendication 10, dans lequel, dans un état déplié, le dispositif électronique pliable (200) est conçu pour réaliser une authentification du dispositif électronique pliable en utilisant le premier capteur d'empreintes digitales (310) pour reconnaître et détecter une empreinte digitale d'un doigt droit d'un utilisateur et en utilisant le second capteur d'empreintes digitales (320) pour reconnaître et détecter une empreinte digitale d'un doigt gauche d'un utilisateur.

15. Dispositif électronique pliable selon la revendication 10, dans lequel le module de montage de capteur (350) comporte une carte de circuit imprimé flexible, *flexible printed circuit board -* FPCB, ou un câble RF de type FPCB, FRC.
